# EUROPÄISCHE PATENTSCHRIFT

(11) **EP 3 141 369 B1**
(45) Veröffentlichungstag und Bekanntmachung des Hinweises auf die Patenterteilung: **28.03.2018**
(21) Anmeldenummer: 15184832.2
(22) Anmeldetag: 11.09.2015
(51) Int. Cl.: B29C 44/14, B29L 31/30

(54) **VERFAHREN ZUM ABDICHTEN EINER NAHT**
METHOD FOR SEALING A SEAM
PROCEDE D'ETANCHEIFICATION D'UNE SOUDURE

(43) Veröffentlichungstag der Anmeldung: 15.03.2017
(73) Patentinhaber: SMP Deutschland GmbH, 79268 Bötzingen (DE)
(72) Erfinder: Buchet, Yann, 67000 Strasbourg (FR)
(74) Vertreter: Westphal, Mussgnug & Partner Patentanwälte mbB

(56) Entgegenhaltungen:
- EP-A1- 0 336 138
- US-A1- 2004 167 253

## Beschreibung

Die Erfindung betrifft ein Verfahren zum Abdichten wenigstens einer Naht wenigstens einer die wenigstens eine Naht aufweisenden Formhaut nach dem Oberbegriff des Patentanspruchs 1.

Innenverkleidungsbauteile für Kraftfahrzeuge werden in der Regel aus Kunststoff gefertigt und besitzen häufig eine mehrschichtige Struktur aus mindestens einem Trägerbauteil und einer Oberflächenschicht. Dabei handelt es sich meist um spritzgegossene Kunststoffbauteile, bei denen als Oberflächenschicht oder Dekorschicht Formhäute, Gewebe, Textilstoffe, Leder oder Kunstleder eingesetzt werden. In Abhängigkeit von Kontur, Struktur und Form des Bauteils und insbesondere aus Gründen der Optik werden dabei häufig Kaschierstoffe mit Nähten eingesetzt. Insbesondere bei der Verwendung von Leder ist das Vorhandensein von Nähten aufgrund des hohen Elastizitätsmoduls des Leders erforderlich, um das Kaschieren des Materials zu ermöglichen. Jedoch auch bei Lederimitaten oder anderen Kunststoffprodukten werden häufig aus Designgründen Nähte eingebracht, um beispielsweise den Eindruck von natürlichem, vernähtem Leder hervorzurufen. Formhäute, beispielsweise Slushhäute, erfüllen bezüglich Farbausprägung und Glanz die Qualitätsansprüche der Automobilindustrie und schaffen gleichzeitig viele Designmöglichkeiten, da auch komplexe Geometrien und Strukturen mit hoher Präzision dargestellt werden können.

Bei der Slushhauttechnik handelt es sich um das Herstellen und Abformen einer Kunststoffhaut aus einer Modellform. Zur Herstellung der Slushhaut, beispielsweise für eine Armaturentafel, wird eine mit Slushpulver gefüllte Wanne an eine erhitzte Formschale angekoppelt. Durch die anschließende Rotation der Wanne mit der Form wird das gelierfähige Kunststoffpulver, beispielsweise das PVC-Pulver, auf der geformten Werkzeugoberfläche verteilt und lagert sich so auf der beheizten Oberfläche der Innenwand der Form ab. Das Pulver verschmilzt in dem Werkzeug, wodurch sich eine homogene Slushhaut bildet, die nach dem Abkühlen von der Form entnommen werden kann. Die exakte Abbildung der Oberflächenstruktur in der Form ermöglicht es sogar, eine Nahtdarstellung aus dem gleichen Material auf die Slushhaut aufzuprägen.

Slushhäute können auch echte Ziernähte aufweisen, die den Eindruck von vernähten, hochwertigen Stoffen, wie Leder vermitteln sollen. Da genähte Slushhäute, wie beispielsweise PVC-Slushhäute an den Nahtstellen jedoch durchstochen sind, um einen möglichst realitätsgetreuen Eindruck eines echten Nähkleides zu vermitteln, müssen sie vor dem Hinterschäumen entlang der Naht wieder abgedichtet werden, damit kein Schaum durch die Nahtstellen dringen kann. Dies kann beispielsweise durch den Auftrag von sogenannten Abdichtbändern erfolgen, wobei entweder Kaltklebebändern aus beispielsweise Acrylat-Klebstoff, oder Schweißbänder, aus beispielsweise hitzeaktivierbaren Copolyestern-Klebstoffen verwendet werden können. Ein Dichtband mit einer ersten Oberfläche zum Abdecken einer Verbindungslinie zwischen einer ersten und einer zweiten Formhaut eines Innenverkleidungsteils eines Fahrzeugs ist beispielsweise in der DE 10 2010 034 598 A1 offenbart. Schweißbänder müssen mit Druck und Hitze appliziert werden, was ein erhöhtes Abzeichnungsrisiko bedeutet. Außerdem bestehen die Abdichtbänder aus einem weiteren Material, welches immer nur bedingt mit dem Material der Haut und dem Material des Schaums kompatibel ist, insbesondere im Hinblick auf die Weichmacherwanderung und die Dauerhaftung.

Die DE 10 2012 009 971 A1 offenbart ein Verbundteil sowie ein Verfahren zu dessen Herstellung, bei welchem ein Block eines expandierbaren Materials auf einer einer Vorderseite gegenüberliegenden Rückseite der Dekorhaut entlang eines Nahtverlaufs einer einzubringenden Naht aufgebracht wird. Die Dekorhaut wird mit dem Block durch eine die Dekorhaut und den Block hintergreifende Naht vernäht, wobei die Naht ein auf der Vorderseite der Dekorhaut befindliches Vorderteil und ein auf der Rückseite des Blocks befindliches Rückenteil umfasst. Das expandierbare Material wird mittels Wärme derart expandiert, dass das Vorderteil der Naht die Vorderseite der Dekorhaut und das Rückenteil der Naht die Rückseite des Blocks jeweils zumindest teilweise einschnürt und ein den Rückenteil der Naht umgebender Bereich der Rückseite des Blocks über das Rückenteil der Naht hinausragt. In einer Ausführungsform wird nach dem Vernähen des Blocks mit der Dekorhaut auf der Rückseite der Dekorhaut und auf der Rückseite des Blocks ein blocküberdeckendes Abdichtband aufgebracht, wodurch es möglich wird, das Verbundteil nach dem Vernähen zu hinterschäumen, ohne daß Schaum auf die Vorderseite der Dekorhaut gelangt. EP0336138 offenbart die Verwendung von Plastisol zur Abdichtung einer Naht in einer Automobilkarosserie. Um die mit Dichtbändern und Abdichtbändern verbundenen, oben aufgeführten Nachteile zu vermeiden, ist es Aufgabe der vorliegenden Erfindung, eine zuverlässigere Nahtabdichtung bereitzustellen, die einerseits den Schaumaustritt beim Hinterschäumen einer Formhaut oder einer Slushhaut verhindert und andererseits den genähten Bereich verstärkt.

Diese Aufgabe wird gelöst durch ein Verfahren nach Patentanspruch 1. Vorteilhafte Ausbildungen sind in den Unteransprüchen offenbart.

Bei dem Verfahren zum Abdichten wenigstens einer Naht wenigstens einer, die Naht aufweisenden Formhaut wird zunächst ein Abdichtmaterial auf einen ersten flächigen Auftragungsbereich der wenigstens einen Formhaut aufgetragen, wobei der Rand des ersten flächigen Auftragungsbereichs die wenigstens eine Naht umschließt. Anschließend wird das aufgetragene Abdichtmaterial aushärten gelassen. Erfindungsgemäß wird als Abdichtmaterial ein Plastisol verwendet.

Unter einem Plastisol versteht man eine physikalische Mischung aus einem pulverförmigen thermoplastischen Polymer und Weichmachern sowie gegebenenfalls Füllstoffen, Treibmittel und Additiven. Die Auswahl der Mischung erfolgt in der Weise, dass das Polymer im Weichmacher zwar löslich ist, die Lösungsgeschwindigkeit bei Raumtemperatur jedoch verschwindend klein ausfällt. Erst bei Temperaturen oberhalb von 80 bis 100°C beginnt das Polymer sich in dem Weichmacher merklich zu lösen. Dieser Vorgang wird als Gelierung oder Gelieren des Plastisols bezeichnet. Die so entstehende Lösung ist von extrem hochviskoser Konsistenz und bei Raumtemperatur nicht mehr fließfähig. Der Schritt der Gelierung ist nicht reversibel.

Ein ungetempertes Plastisol liegt bei Raumtemperatur noch als flüssige Paste vor und ist gieß-, spritz- und streichfähig. Je nach Zusammensetzung ist die Mischung über lange Zeit lagerstabil ohne zu gelieren. Nach Erwärmung über einige Minuten bei typischerweise 160 bis 180°C wird das Plastisol zu einem dauerhaft zähelastischen Kunststoff.

Der Begriff Plastisol wird sowohl für die ungehärtete Mischung, als auch für das fertige Produkt, also die ausgetemperte Mischung verwendet. Plastisole lassen sich aus verschiedenen Polymeren herstellen, wobei von Bedeutung vor allem die PVC-Plastisole sind, die auch bekannt sind als Weich-PVC, oder Hot Melt Vinyl.

Durch das Verwenden von Plastisol als Abdichtmaterial und anschließendes Tempern oder Aushärten geliert das Plastisol und kann so die Naht der Formhaut oder Slushhaut wirksam abdichten, dass sowohl die Form als auch die Haptik der Naht weiterhin erkennbar bleiben, jedoch beim Hinterschäumen der Haut kein Kunststoffschaum durch die Nahtstellen austreten kann.

Die Formhaut beststeht dabei vorzugsweise aus einem thermoplastischen Polymer, und das Plastisol wird vorzugsweise aus dem gleichen thermoplastischen Polymer hergestellt, wie die Formhaut, wobei das thermoplastische Polymer vorteilhafterweise ein PVC-Kunststoff ist. Durch die Verwendung gleicher Polymere sowohl für die Formhaut, als auch für die thermoplastische Komponente des Plastisols wird nach dem Aushärten ein Verbundstoff geschaffen, der die gleichen thermischen, optischen und weiteren physikalischen Eigenschaften aufweist wie die Formhaut. Beispielsweise sind die thermischen Ausdehnungskoeffizienten und die elastischen Eigenschaften der Formhaut und des Plastisols dann nahezu identisch, so daß sich bei den erheblichen thermischen Schwankungen, wie sie in Fahrzeugen wetterbedingt häufig auftreten, Formhaut und Plastisol nicht gegeneinander verziehen, oder die Nahtstellen wellig werden.

Um beispielsweise eine noch bessere Druckabdichtung zu erreichen, kann das Abdichtmaterial auch auf einen dem ersten flächigen Auftragungsbereich gegenüberliegenden zweiten flächigen Auftragungsbereich der wenigstens einen Formhaut aufgetragen werden, wobei der Rand des zweiten flächigen Auftragungsbereichs die wenigstens eine Naht umschließt.

Das Abdichtmaterial ist vorzugsweise flüssig oder viskos, oder eine Paste, wenn es aufgetragen wird, damit es leicht in die abzudichtenden Fugen und Öffnungen der Formhaut bei den Nähten eindringt. So kann das Abdichtmaterial beispielsweise durch Rakeln oder auch durch Aufsprühen, beispielsweise mit einer Düse, oder durch Auftragen mit einer Düse aufgebracht werden.

Zum Aushärten lassen des Abdichtmaterials kann die Tempertaur im ersten flächigen Auftragungsbereich der Formhaut auf beispielsweise mehr als 100°C, vorzugsweise auf zwischen 140 und 180°C erhöht werden. Bei temperaturempfindlichen Formhäuten ist es auch möglich, ein Plastisol herzustellen und zu verwenden, das bei entsprechend niedrigen Temperaturen geliert und bei Raumtemperatur aushärtet.

Zum Aushärten lassen des Abdichtmaterials kann das Abdichtmaterial im ersten und/oder zweiten flächigen Auftragungsbereich der Formhaut aufgeheizt werden. Eine nur lokale Aufheizung der Formhaut bietet sich immer dann an, wenn das Aufheizen der gesamten Formhaut zu ungewünschten Oberflächenstrukturänderungen führen könnte. So kann beispielsweise das aufgetragene Abdichtmaterial durch Heißluft ausgehärtet werden, wobei die Heißluft beispielsweise lokal nur im ersten und/oder zweiten flächigen Auftragungsbereich des Abdichtmaterials die Formhaut aufheizt.

Die Formhaut oder das Formhautkleid kann nach dem Aushärten lassen des Abdichtmaterials mit einem flüssigen Kunststoffschaum hinterschäumt und/oder zwischengeschäumt und/oder frontgeschäumt werden, ohne daß Schaum an den Verbindungsstellen oder an den Nahtstellen auf die andere Formhautseite austritt.

Die Formhaut, die vorzugsweise als Slushhaut ausgebildet ist, ist vorteilhafterweise so geformt, dass ihre Dicke außerhalb des ersten flächigen Auftragungsbereichs zwischen 0,5 mm und 2 mm, vorzugsweise zwischen 0,7 mm und 1,4 mm und besonders vorzugsweise bei etwa 1 mm liegt. Eine derartige Formhaut kann, wenn sie mit Kunststoffschaum zu einem Verbundgegenstand ausgebildet worden ist, elastisch eingedrückt werden. Sie gibt auf Druck nach und vermittelt daher eine angenehme, weiche Haptik. An den Nahtstellen ist die Schichtdicke des aufgetragenen Abdichtmaterials vorzugsweise kleiner als 0,5 mm und besonders vorzugsweise kleiner als 0,3 mm. So kann dafür gesorgt werden, dass die Struktur der Naht noch erfühlt werden kann.

Damit an den Nahtstellen zwischen zwei Formhäuten kein verdickter, wulstiger Bereich entsteht, wird die wenigstens eine Formhaut so geformt, dass sie innerhalb des ersten flächigen Auftragungsbereichs einen Teilbereich aufweist, in welchen sie vorzugsweise höchstens halb so dick, wie außerhalb des ersten flächigen Auftragungsbereichs ist. Die Schichtdicken in diesem Teilbereich liegen vorzugsweise zwischen 0,2 mmm und 0,5 mm.

Die wenigstens eine Naht einer Formhaut, bzw. einer Slushhaut kann als Ziernaht jedoch auch in die Oberflächenstruktur der wenigstens einen Formhaut eingeprägt sein und/oder aus dem gleichen Material wie die wenigstens eine Formhaut ausgebildet sein, um keine unterschiedlichen Ausdehnungskoeffizienten zwischen Formhaut und Naht entstehen zu lassen, die dazu führen könnten, daß die Formhaut im Nahtbereich sich verzieht.

Formhäute der beschriebenen Art werden häufig als Teil einer Instrumententafel eines Kraftfahrzeugs oder als Teil einer Türverkleidung eines Kraftfahrzeugs oder als Teil eines Dachhimmels eines Kraftfahrzeugs ausgebildet.

Die Erfindung wird nachfolgend anhand von Ausführungsbeispielen erläutert. Es zeigen:
- Figur 1: eine Formhaut mit Ziernähten in der Rückansicht,
- Figur 2: eine Formhaut mit Ziernähten im Querschnitt

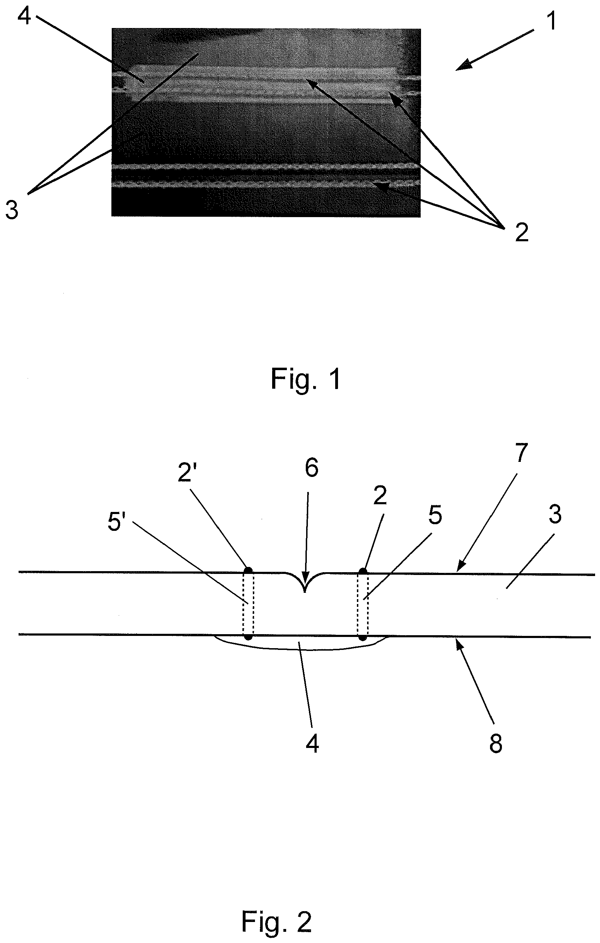

Figur 1 zeigt eine Formhaut 1, die mit auf der Slushhaut 3 angeordneten Ziernähten 2 versehen ist. Die Nähte 2 werden durch Auftrag von Plastisolpaste 4 abgedichtet und nach dem Auftragen der Paste 4 erhitzt, um eine dünne, gleichmäßig die Nahtstellen überdeckende Siegelschicht zu bilden und anschließend ausgehärtet. Bei der in Figur 1 vorliegenden PVC-Slushhaut 3 wird ein Plastisol 4 aus Weich-PVC verwendet. Der Auftrag des Plastisols 4 erfolgt über eine Düse, die das flüssige PVC aufsprüht oder aufrakelt. Das flüssige PVC wird aufgesprüht oder aufgerakelt. Die Aushärtung der Siegelschicht wird anschließend mit einer Heißluftdüse beschleunigt. Durch die Nutzung eines sehr günstigen Abdichtmaterials, das drucklos appliziert werden kann, und welches vollständig kompatibel mit dem Formhautmaterial ist, kann die Formhaut 1 an den Nahtstellen 2, welche immer durch Durchstiche und durch eine evtl. Einkerbung zur Darstellung einer Fake-Funktionsnaht Schwachstellen bilden, sogar noch verstärkt werden, wodurch eine robuste Slushhaut 3 hergestellt werden kann. Die bei der Verwendung von Abdichtbändern immer wieder zu beobachtende Bandablösung oder Faltenbildung kann auf diese Weise wirksam vermieden werden.

Figur 2 zeigt eine Slushhaut 3 im Querschnitt mit einer Fake-Funktionsnaht. Eine Fake-Funktionsnaht ist eine Naht, die den Eindruck zweier miteinander vernähter Häute vermitteln soll, die jedoch nur auf eine einzige Haut genäht ist. Die Slushhaut 3 weist zwei Ziernähte 2, 2' mit Durchstichen 5, 5' auf. Zwischen den beiden, im Wesentlichen parallel zueinander verlaufenden Ziernähten 2, 2' verläuft eine Einkerbung 6 auf einer Sichtseite 7, die den Eindruck vermitteln soll, daß an dieser Stelle zwei hochwertige Lederstoffe aneinandergenäht sind. An der Einkerbung 6 ist die Slushhaut 3 geschwächt, da sie dort eine geringere Dicke, beispielsweise eine Dicke von zwischen 0,15 mm und 0,4 mm, z.B. 0,2 mm aufweist. Um einerseits diese Materialschwächung auszugleichen, andererseits eine Abdichtung der Nähte 2, 2' für die Beschäumung der Slushhaut 3 bereitzustellen, ist der Bereich zwischen den beiden Ziernähten 2, 2' auf der zu beschäumenden Rückseite 8 der Slushhaut 3 mit Plastisol 4 überdeckt, wobei die Durchstiche 5 der beiden Ziernähte 2, 2' ebenfalls von Plastisol 4 überdeckt sind. Die Dicke der Plastisolschicht 4 außerhalb des Bereichs zwischen den beiden Ziernähten liegt im vorliegenden Beispiel zwischen 0,7 mm und 1,4 mm, so daß durch das Plastisol 4 tatsächlich eine Stabilisierung der Materialschwächung in der Nähe der Einkerbung 6 erreicht werden kann. Selbstverständlich sind dort auch andere Dicken vorstellbar.

Schwächungen der Haut 3 können jedoch auch beabsichtigt sein, beispielsweise an Stellen, an denen ein Airbag auslösen soll. In diesen Fällen könnte das Plastisol 4 zwischen den Durchstichen 5, 5' entsprechend dünner aufgetragen werden, oder in Form zweier voneinander beabstandeter Streifen entlang der Nähte 2, 2' aufgetragen werden.

### Bezugszeichenliste

- 1: Formhaut
- 2, 2': Naht
- 3: Slushhaut
- 4: Plastisol
- 5, 5': Durchstiche
- 6: Einkerbung
- 7: Sichtseite
- 8: Rückseite

## Patentansprüche

1. Verfahren zum Abdichten wenigstens einer Naht (2) wenigstens einer, die wenigstens eine Naht (2) aufweisenden Formhaut (1), aufweisend folgende Verfahrensschritte:
a) Auftragen eines Abdichtmaterials (4) auf einen ersten flächigen Auftragungsbereich der wenigstens einen Formhaut (1), wobei der Rand des ersten flächigen Auftragungsbereichs die wenigstens eine Naht (2) umschließt, und
b) Aushärten Lassen des aufgetragenen Abdichtmaterials,
**dadurch gekennzeichnet, dass**
das Abdichtmaterial ein Plastisol (4) ist.

2. Verfahren nach Anspruch 1,
**dadurch gekennzeichnet, dass**
die Formhaut (1) aus einem thermoplastischen Polymer und das Plastisol (4) aus dem gleichen thermoplastischen Polymer hergestellt werden, wobei das thermoplastische Polymer vorzugsweise ein PVC-Kunststoff ist.

3. Verfahren nach einem der vorigen Ansprüche,
**dadurch gekennzeichnet, dass**
das Abdichtmaterial (4) auf einen dem ersten flächigen Auftragungsbereich gegenüberliegenden zweiten flächigen Auftragungsbereich der wenigstens einen Formhaut (1) aufgetragen wird, wobei der Rand des zweiten flächigen Auftragungsbereichs die wenigstens eine Naht (2) umschließt.

4. Verfahren nach einem der vorigen Ansprüche,
**dadurch gekennzeichnet, dass**
das Abdichtmaterial (4) flüssig oder viskos ist, wenn es aufgetragen wird.

5. Verfahren nach einem der vorigen Ansprüche,
**dadurch gekennzeichnet, dass**
das Auftragen des Abdichtmaterials (4) durch Rakeln oder Aufsprühen erfolgt.

6. Verfahren nach einem der vorigen Ansprüche,
**dadurch gekennzeichnet, dass**
das Abdichtmaterial (4) mit einer Düse aufgetragen wird.

7. Verfahren nach einem der vorigen Ansprüche,
**dadurch gekennzeichnet, dass**
zum Aushärten Lassen des Abdichtmaterials (4) die Temperatur des Abdichtmaterials (4) im ersten flächigen Auftragungsbereich der Formhaut (1) auf mehr als 100 Grad Celsius, vorzugsweise auf zwischen 140 und 180 Grad Celsius erhöht wird.

8. Verfahren nach einem der vorigen Ansprüche,
**dadurch gekennzeichnet, dass**
das aufgetragene Abdichtmaterial (4) mit Heißluft ausgehärtet wird.

9. Verfahren nach einem der vorigen Ansprüche,
**dadurch gekennzeichnet, dass**
die wenigstens eine Formhaut (1) nach dem Aushärten Lassen des Abdichtmaterials (4) mit einem flüssigen Kunststoffschaum hinterschäumt und/oder zwischengeschäumt und/oder frontgeschäumt wird.

10. Verfahren nach einem der vorherigen Ansprüche,
**dadurch gekennzeichnet, dass**
die wenigstens eine Formhaut (1) so geformt wird, dass ihre Dicke außerhalb des ersten flächigen Auftragungsbereichs zwischen 0,5 mm und 2 mm, vorzugsweise zwischen 0,7 mm und 1,4 mm liegt.

11. Verfahren nach einem der vorherigen Ansprüche,
**dadurch gekennzeichnet, dass**
die Schichtdicke des aufgetragenen Abdichtmaterials (4) kleiner als 1 mm, vorzugsweise kleiner als 0,5 mm und besonders vorzugsweise kleiner als 0,2 mm ist.

12. Verfahren nach einem der vorigen Ansprüche,
**dadurch gekennzeichnet, dass**
die wenigstens eine Formhaut (1) so geformt wird, daß sie innerhalb des ersten flächigen Auftragungsbereichs einen Teilbereich aufweist, in welchem sie höchstens halb so dick ist, wie außerhalb des ersten flächigen Auftragungsbereichs.

13. Verfahren nach einem der vorigen Ansprüche,
**dadurch gekennzeichnet, dass**
die wenigstens eine Naht (2) als Ziernaht in die Oberflächenstruktur der wenigstens einen Formhaut (1) eingeprägt wird und/oder aus dem gleichen Material wie die wenigstens eine Formhaut (1) ausgebildet wird.

14. Verfahren nach einem der vorigen Ansprüche,
**dadurch gekennzeichnet, dass**
die wenigstens eine Formhaut (1) als Slushhaut (3), vorzugsweise als PVC-Slushhaut (3), ausgebildet wird.

15. Verfahren nach einem der vorigen Ansprüche,
**dadurch gekennzeichnet, dass**
die wenigstens eine Formhaut (1) als Teil einer Instrumententafel eines Kraftfahrzeugs oder als Teil einer Türverkleidung eines Kraftfahrzeugs oder als Teil eines Dachhimmels eines Kraftfahrzeugs ausgebildet wird.

## Claims

1. Method for sealing at least one seam (2) of at least one moulded skin (1) having a seam (2), comprising the following method steps:
a) application of a sealing material (4) to a first superficial application region of the at least one moulded skin (1), wherein the edge of the first superficial application region surrounds the at least one seam (2), and
b) allowing the applied sealing material to harden,
**characterised in that** the sealing material is a plastisol (4) .

2. Method according to claim 1, **characterised in that** the moulded skin (1) is produced from a thermoplastic polymer, and the plastisol (4) from the same thermoplastic polymer, wherein the thermoplastic polymer is preferably a PVC plastic.

3. Method according to any of the preceding claims,
**characterised in that** the sealing material (4) is applied to a second superficial application region of the at least one moulded skin (1) which is opposite the first superficial application region, wherein the edge of the second superficial application region surrounds the at least one seam (2).

4. Method according to any of the preceding claims,
**characterised in that** the sealing material (4) is liquid or viscous when it is applied.

5. Method according to any of the preceding claims,
**characterised in that** the sealing material (4) is applied by blade or by spraying.

6. Method according to any of the preceding claims,
**characterised in that** the sealing material (4) is applied via a nozzle.

7. Method according to any of the preceding claims, **characterised in that** to allow the sealing material (4) to harden, the temperature of the sealing material (4) in the first superficial application region of the moulded skin (1) is increased over 100 degrees Celsius, preferably to between 140 and 180 degrees Celsius.

8. Method according to any of the preceding claims,
**characterised in that** the applied sealing material (4) is hardened by means of hot air.

9. Method according to any of the preceding claims,
**characterised in that** after the sealing material (4) has hardened, the at least one moulded skin (1) is back-foamed and/or middle-foamed and/or front-foamed with a liquid plastic foam.

10. Method according to any of the preceding claims,
**characterised in that** the at least one moulded skin (1) is formed such that its thickness outside the first superficial application region is between 0.5 mm and 2 mm, preferably between 0.7 mm and 1.4 mm.

11. Method according to any of the preceding claims,
**characterised in that** the layer thickness of the applied sealing material (4) is less than 1 mm, preferably less than 0.5 mm and in particular preferably less than 0.2 mm.

12. Method according to any of the preceding claims,
**characterised in that** the at least one moulded skin (1) is formed such that, inside the first superficial application region, it has a partial region in which it is at most half as thick as outside the first superficial application region.

13. Method according to any of the preceding claims,
**characterised in that** the at least one seam (2) is embossed as a decor seam in the surface structure of the at least one moulded skin (1) and/or formed from the same material as the at least one moulded skin (1).

14. Method according to any of the preceding claims,
**characterised in that** the at least one moulded skin (1) is formed as a slush skin (3), preferably as a PVC slush skin (3).

15. Method according to any of the preceding claims,
**characterised in that** the at least one moulded skin (1) is configured as part of a dashboard of a motor vehicle or as part of a door card of a motor vehicle or as part of a headlining of a motor vehicle.

## Revendications

1. Procédé permettant d'étanchéifier au moins une jointure (2) d'au moins une peau moulée (1) comportant cette jointure (2) comportant les étapes suivantes consistant à :
a) appliquer un matériau d'étanchéité (4) sur une première zone d'application plane de la peau moulée (1), le bord du premier domaine d'application plan comprenant la jointure (2), et
b) laisser durcir le matériau d'étanchéité appliqué,
**caractérisé en ce que**
le matériau d'étanchéité est un plastisol (4).

2. Procédé conforme à la revendication 1,
**caractérisé en ce que**
la peau moulée (1) est réalisée en un polymère thermoplastique et le plastisol (4) est réalisé dans le même polymère thermoplastique, le polymère thermoplastique étant de préférence un PVC.

3. Procédé conforme à l'une des revendications précédentes,
**caractérisé en ce que**
le matériau d'étanchéité (4) est appliqué sur une seconde zone d'application plane de la peau moulée (1) opposée à la première zone d'application plane, le bord de la seconde zone d'application plane entourant la jointure (2).

4. Procédé conforme à l'une des revendications précédentes,
**caractérisé en ce que**
le matériau d'étanchéité (4) est liquide ou visqueux lorsqu'il est appliqué.

5. Procédé conforme à l'une des revendications précédentes,
**caractérisé en ce que**
l'application du matériau d'étanchéité (4) est effectué à la racle ou par pulvérisation.

6. Procédé conforme à l'une des revendications précédentes,
**caractérisé en ce que**
le matériau d'étanchéité (4) est appliqué au moyen d'une buse.

7. Procédé conforme à l'une des revendications précédentes,
**caractérisé en ce que**
pour laisser durcir le matériau d'étanchéité (4), la température de ce matériau (4) est augmentée, dans la première zone d'application plane de la peau moulée (1) à plus de 100°C, de préférence entre 140 et 180°C.

8. Procédé conforme à l'une des revendications précédentes,
**caractérisé en ce que**
le matériau d'étanchéité (4) appliqué est durci avec de l'air chaud.

9. Procédé conforme à l'une des revendications précédentes,
**caractérisé en ce qu'**
après le durcissement du matériau d'étanchéité (4), la peau moulée (1) est traitée par moussage à sa face postérieure et/ou à sa partie intermédiaire et/ou sur sa face frontale avec une mousse synthétique liquide.

10. Procédé conforme à l'une des revendications précédentes,
**caractérisé en ce que**
la peau moulée (1) est mise en forme de sorte que son épaisseur à l'extérieur de la première zone d'application plane soit comprise entre 0,5 mm et 2 mm, de préférence entre 0,7 mm et 1,4 mm.

11. Procédé conforme à l'une des revendications précédentes,
**caractérisé en ce que**
l'épaisseur de la couche de matériau d'étanchéité (4) appliqué est inférieure à 1 mm, de préférence inférieure à 0,5 mm et de façon particulièrement préférentielle inférieure à 0,2 mm.

12. Procédé conforme à l'une des revendications précédentes,
**caractérisé en ce que**
la peau moulée (1) est mise en forme de sorte qu'elle comporte à la partie interne de la première zone d'application plane une zone partielle dans laquelle elle a au plus une épaisseur égale à la moitié de son épaisseur à l'extérieur de cette première zone d'application plane.

13. Procédé conforme à l'une des revendications précédentes,
**caractérisé en ce que**
la jointure (2) est imprimée sous la forme d'une jointure ornementale dans la structure de la surface de la peau moulée (1) et/ou est réalisée dans le même matériau que la peau moulée (1).

14. Procédé conforme à l'une des revendications précédentes,
**caractérisé en ce que**
la peau moulée (1) est réalisée sous la forme d'une peau moulée au renversé (3), de préférence d'une peau moulée au renversé (3) en PVC.

15. Procédé conforme à l'une des revendications précédentes,
**caractérisé en ce que**
la peau moulée (1) est réalisée en tant que partie d'un tableau de bord de véhicule, ou en tant que partie d'un habillage de porte d'un véhicule, ou en tant que partie d'un habillage de plafond d'un véhicule.
